# EUROPEAN PATENT APPLICATION

(11) **EP 0 593 047 A1**
(43) Date of publication of application: **20.04.1994**
(21) Application number: 93116615.1
(22) Date of filing: 14.10.1993
(51) Int. Cl.: G05G 9/047, B25J 13/02, G06K 11/18

(54) **A remote-control device for machine tools and the like, the use of the device in a machine tool or the like, and a machine tool comprising the device**

(30) Priority: 16.10.1992 IT TO920835
(71) Applicant: FIDIA S.P.A., I-10099 San Mauro Torinese (IT)
(72) Inventor: Savazzi, Ezio, I-20095 Cusano Milanino (Milano) (IT)
(74) Representative: Quinterno, Giuseppe

(57) **Abstract**

The control device comprises a support housing (2) in which a joystick (5-22) is movable along three axes (X, Y, Z), sensors (25, 26, 28-31) being associated with the joystick for supplying electrical signals indicative of the magnitudes and signs of its movements. In operation, processing circuits (34, 35) generate electrical signals usable for controlling movements of one or more members of a machine tool (M, CM). A rotatable keypad (40) fitted on one face of the housing (2) can adopt two operative arrangements according to whether the control device (1) is used with the joystick oriented upwards or downwards. The rotation of the keypad (40), which is detected by sensors (52, 53), is conveniently used to modify the sign convention existing between the axes of the control device and the axes associated with the member or members of the machine (M, CM) to which the control device (1) is connected.

## Description

The present invention relates to a device for the remote control of the movement of one or more members of a machine, particularly a machine tool, along at least three independent axes.

The remote-control device according to the invention is characterized in that it comprises, in combination
a support housing;
a joystick control device which is movable in the housing and can perform movements along at least three reference axes, and which includes an operating member extending from the housing and movable manually along the reference axes;
electrical detector means disposed in the housing for providing electrical signals indicative of the magnitudes and signs of the movements along the reference axes imparted to the operating member of the joystick device in use;
processing circuit means connected to the detector means for generating electrical signals usable for bringing about movements of a member or members of a machine tool or the like along three axes, the movements corresponding to the movements of the operating member of the joystick device relative to the reference axes;
stabilizing means for enabling the housing to be fixed to a support structure in at least first and second operative arrangements in which the operating member of the joystick device extends upwardly and downwardly from the housing, respectively;
hand-operable selection means which are intended to adopt first and second conditions when the joystick device is used in the first and second operative arrangements, respectively ; the selection means being able, in each of the conditions, to provide the circuit means with electrical signals for establishing a predetermined sign relationship between one or more of the reference axes associated with the joystick device and the corresponding axes of the machine.

The invention also relates to the use of a remote-control device of the aforesaid type for controlling the movement of the axes of a machine tool, particularly a profile-copying machine, in the manner defined in the appended claims.

A further subject of the invention is a machine tool, particularly a profile-copying machine, comprising a remote-control device with the characteristics defined in the appended claims.

Further characteristics and advantages of the invention will become clear from the detailed description which follows with reference to the appended drawings, provided purely by way of non-limiting example, in which:
Figure 1 is a perspective view of a remote control device according to the invention;
Figure 2 is an exploded perspective view of the remote control device shown in Figure 1;
Figure 3 is a sectioned view taken on the line III-III of Figure 1;
Figure 4 is an exploded perspective view of electrical/electronic circuits and devices included in the remote control device of Figures 1 and 2;
Figure 5 is a sectioned view taken on the line V-V of Figure 1;
Figure 6a is a front view of the remote control device in a first operative arrangement;
Figure 6b is a front view of the remote control device, showing how a control keypad included therein can be rotated;
Figure 6c is a front view of the remote control device in a second operative arrangement of use;
Figure 7 shows a machine tool comprising a remote control device according to the invention used in a first operative arrangement ; and
Figure 8 shows a machine tool comprising a remote control device used in its second operative arrangement of use.

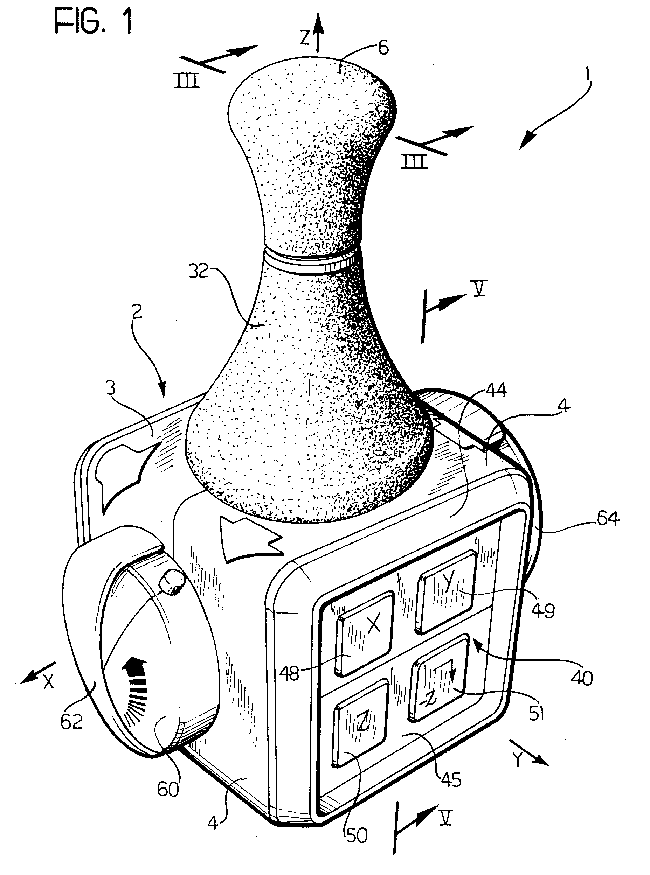

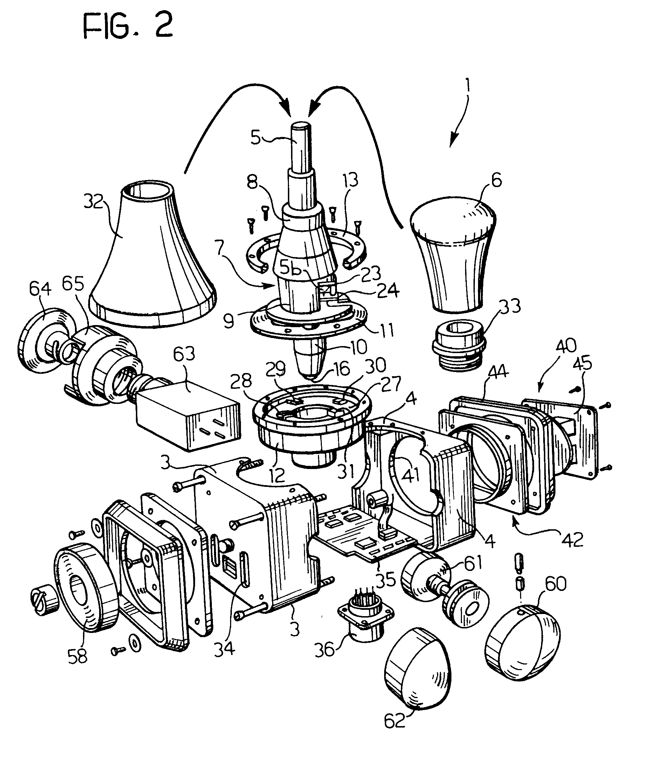

Figures 1 and 2 show a remote-control device according to the invention, generally indicated 1. The device comprises a rigid support housing 2 substantially in the form of a cube which, in the embodiment illustrated, is composed of two interconnected half-shells 3 and 4.

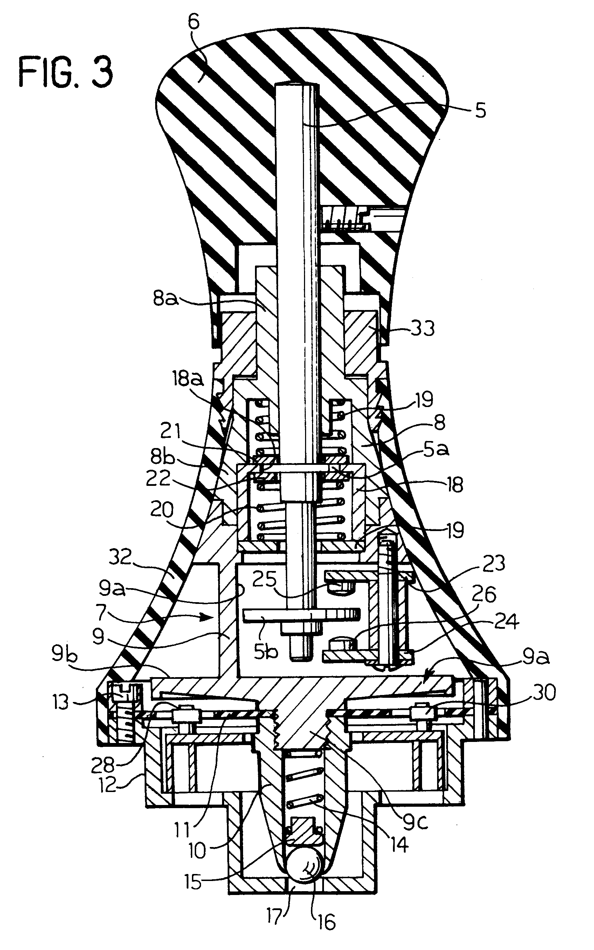

A joystick control device is mounted in the housing 2. The joystick device (see Figures 2 and 3 in particular) comprises a rod 5, on the upper end of which a knob 6 is fixed. The rod extends slidably within the upper, substantially tubular portion of a hollow body, generally indicated 7. For structural reasons, in the embodiment illustrated, the body 7 is formed by two elements 8 and 9 which are joined together by means of a threaded coupling 10 (Figure 3).

The rod 5 is slidable in an upper tubular portion 8a of the element 8 and through the substantially bell-shaped lower portion 8b of that element. The lower end of the rod 5 extends within the upper, hollow portion 9a of the element 9. This element has a lower threaded shank 9c which is screwed into the upper end of a tubular element 10, the outer surface of which is tapered downwardly at its lower end, like a truncated cone.

The intermediate region of the element 9 forms a substantially disc-like, radial outer collar 9b.

The inner edge of a substantially annular resilient membrane 11 is clamped between the element 9 and the tubular element 10. The periphery of the membrane is clamped between the upper edge of a cup-shaped element 12 with a stepped profile and a clamping ring 13 fixed thereto by means of screws.

A helical spring 14 disposed in the upper portion of the axial duct defined in the tubular element 10 urges a thrust member 15 downwards, the thrust member acting on a ball 16 (Figure 3). The lower end of the tubular element 10 is deformed slightly in order to reduce its end section so that the ball 16 can project partially from the tubular element without being able to escape therefrom.

In the centre of its base wall (Figure 3), the cup-shaped element 12 has a hole 17 in which the portion of the ball 16 which projects from the tubular element 10 can be disposed.

An inverted beaker-like element 18 with a central hole 18a is disposed in the bell-like portion 8b of the element 8. The bottom of this beaker-like element in turn acts on a washer 19 which acts on an internal annular shoulder of the top portion of the element 9.

The portion of the rod 5 which extends within the bell-shaped portion 8b of the element 8 has an outer radial collar 5a which can extend through the hole 18a in the inverted beaker-like element 18 with radial clearance.

Two helical springs 19 and 20 are disposed in the bell-shaped portion 8b of the element 8 above and below the inverted beaker-like element 18, respectively. The bottom of the spring 19 acts on a washer 21 which, in the rest condition shown in Figure 3, bears both on the collar 5a of the rod 5 and on the top surface of the inverted beaker-like element 18.

The bottom of the helical spring 20 reacts against the washer 19 and its top reacts against a washer 22 which, in the rest condition shown in Figure 3, acts against the upper wall of the inverted beaker-like element 18.

The springs 19 and 20 are preloaded so that, at rest, that is, when no force is applied to the knob 6, they keep the rod 5 in the position shown in the drawing. In this condition, the lower end of the rod 5 is spaced from the surface of the element 9 which faces it and the knob 6 is correspondingly also raised relative to the top of the upper tubular portion 8a of the element 8.

The lower portion of the rod 5 which extends within the element 9 forms an outer radial collar, indicated 5b in Figure 3. In the rest condition shown in Figure 3, this collar extends half-way between two support plates 23 and 24 which extend in respective parallel planes oriented transverse the axis of the rod 5. These plates are fixed to the member 9 in the manner illustrated in Figure 3 and carry respective sensors 25 and 26 at their ends which face the collar 5b of the rod 5 on opposite sides. Each sensor comprises a photodiode which can direct a beam of radiation towards the collar 5b and an associated phototransistor which can detect the radiation reflected or scattered back by the collar. The arrangement of the sensors 25 and 26 is such that, as a result of a downward movement of the rod 5, the radiation detected by the phototransistor of the sensor 26 increases, whereas the radiation detected by the phototransistor of the sensor 25 correspondingly decreases. The signals supplied by the phototransistors of the sensors 25 and 26 in operation can be combined differentially to provide an indication of the magnitudes and signs of the axial movements of the rod 5.

As shown in Figures 2 and 3, an annular circuit board 27, through which the tubular element 10 extends, is fixed in the cup-shaped element 12. The top of this board carries four sensors 28 to 31 spaced angularly by 90^{o}. As can be seen in Figure 3, the sensors extend through corresponding holes in the membrane 11 and face corresponding portions of the disc-like portion 9b of the element 9.

Each of the sensors 28 to 31 conveniently comprises a light-emitting diode and an associated phototransistor which receives some of the radiation reflected or scattered back by the lower face of the disc 9b. In the rest condition shown in Figure 3, the lower surface of the disc 9b is substantially equally spaced from the four sensors 28 to 31.

In use, the rod 5 can be moved by the knob 6 from the rest position shown in Figure 3, in general, along three axes indicated X, Y and Z in Figure 1. The axis Z coincides with the axis of the rod 5 at rest, and the axes X and Y correspond, respectively, to the directions in which the pairs of sensors 28, 30 and 29, 31 are aligned.

The cup-shaped element 12 is fixed in a hole in the top of the housing 2.

A substantially frustoconical sleeve 32 of soft elastomeric material is fixed at its bottom to the upper edge of the cup-shaped element 12 and is anchored at its top to a ring nut 33 which is screwed into the bell-shaped portion 8b of the element 8.

In use, the rod 5 can be moved along the axes X, Y and Z by means of the knob 6. The magnitude and sign of the movement along the axis Z can be detected by the sensors 25 and 26 as described above. The magnitudes and signs of the movements of the rod 5 along the axes X and Y, which are possible by virtue of the suspension of the member 9 by means of the membrane 11, can be detected by the differential combination of the signals supplied by the two pairs of sensors 28, 30 and 29, 31, respectively.

When the joystick device described above is released, the springs 19 and 20 and the membrane 11 return the joystick resiliently to the rest condition of Figure 3 in which the ball 16 is engaged in the seat 17 in the cup-shaped element 12. The use of the ball in the seat prevents the joystick from being able to oscillate around the rest position in the released condition as a result of vibrations.

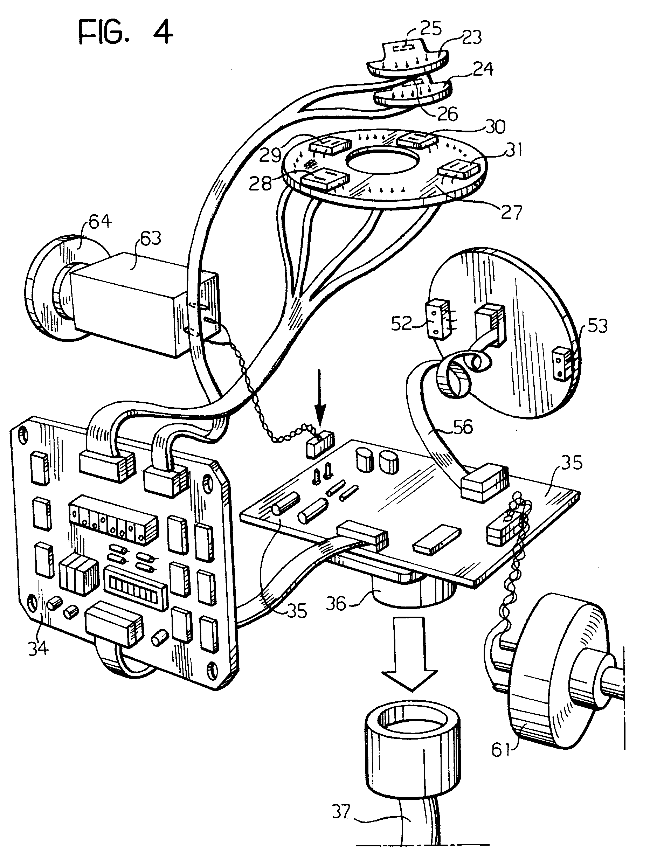

As shown in Figure 4, the sensors 25 and 26 and the sensors 28 to 31 are connected to a circuit board generally indicated 34. This board is mounted in the half-shell 3 as can be seen from Figure 2, and is connected in turn to a further circuit board 35 (Figures 2 and 4) which is also mounted in the housing 2 on the face opposite that from which the joystick extends. The bottom of the circuit board 35 is connected to a multipole connector 36 which can be connected to a complementary connector of a multicore cable 37 for enabling the device to be connected to a machine tool or the like.

The connector 36 extends through a hole formed in the housing 2 in the face opposite that from which the joystick extends.

The circuits carried by the circuit boards 34 and 35 are arranged to process the signals provided by the sensors 25, 26 and 28-31 in order to generate electrical signals which can be used to bring about movements of a member or members of a machine, for example, a machine tool, along three axes univocally associated with the axes X, Y and Z of the joystick device described above.

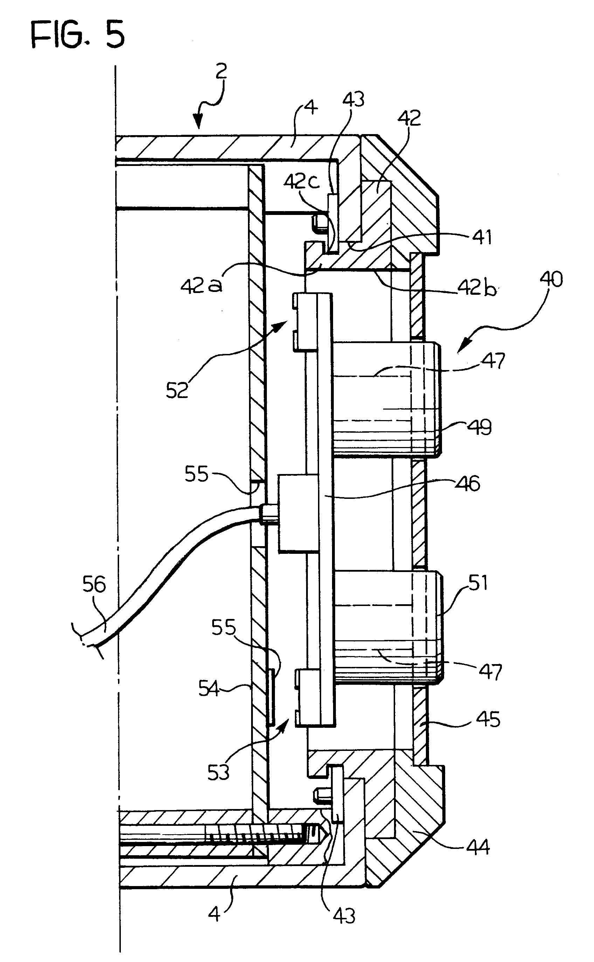

A keypad, generally indicated 40, is mounted on a face of the cube-shaped housing 2 of the control device. As can be seen in Figure 2, and even better in Figure 5, the face of the half-shell 4 with which the keypad 40 is associated has a circular opening 41. A tubular appendage 42a which extends from the edge of a hole 42b in a quadrangular plate 42 is mounted rotatably in this opening. The part of the tubular portion 42a which extends within the half-shell 4 has a groove 42c in which two or more washers 43 are engaged and fixed in positions spaced equiangularly around the opening 41 in this half-shell.

A frame 44 is fitted on the outside of the plate 41 and a quadrangular panel 45, which, in the embodiment illustrated, has four square holes, is fixed therein.

A circular insulating plate, indicated 46 in Figures 2 and 4, extends within the tubular projection 42a of the plate 42 and is fixed to the front panel 45 with the interposition of spacers 47, shown in broken outline in Figure 5.

Four push-button control switches 48 to 51, fixed to the face of the plate 46 which faces the front panel 45, extend through corresponding holes in the front panel 45.

The face of the plate 46 which faces the interior of the half-shell 4 carries two sensors 52 and 53 in respective diametrally opposed positions with respect to the axis of the opening 41 in the half-shell. Each of the sensors is conveniently constituted by a light-emitting diode/phototransistor pair. Within the half-shell 4, facing the plate 46, there is a diaphragm 54 having a central hole 55 through which a bundle of insulated wires 56 extends with ample clearance and connects the circuit board 46 to the circuit board 35, as shown in Figure 4.

The diaphragm 54 carries an optically-detectable mark 55 in a position facing one of the sensors 52 and 53.

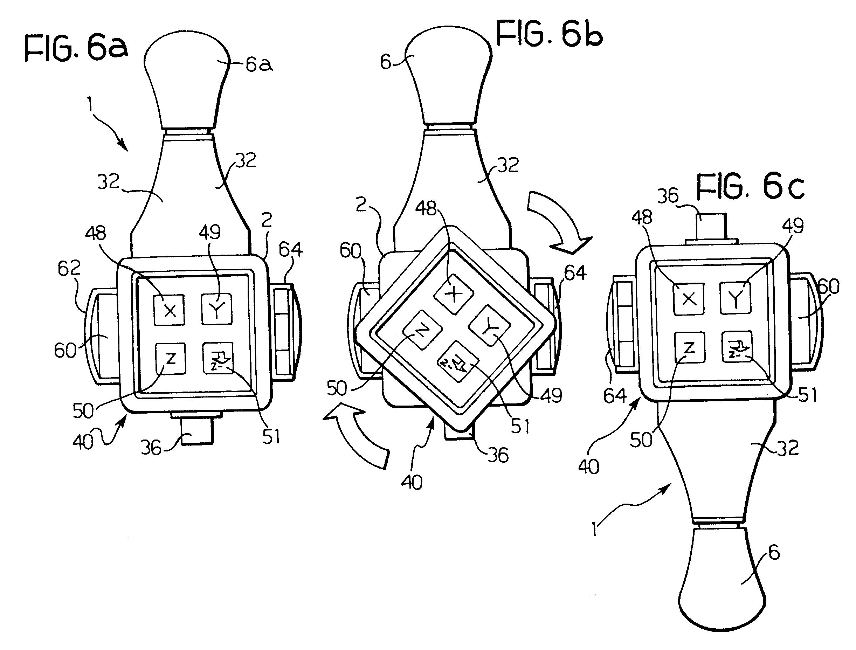

Conveniently, the front surfaces of the keys 48, 49 and 50 carry the symbols X, Y and Z, as shown in Figures 1 and 6a.

As will be explained further below, the control device is intended for use in two different operative arrangements shown in Figure 6a and Figure 6c, in which the joystick 6, 32 extends upwardly and downwardly, respectively.

In order to use the control device in the operative arrangement of Figure 6c, the keypad 40 may conveniently be rotated, as shown in Figure 6b, so that the symbols X, Y and Z applied to the push-buttons or keys of the keypad are also correctly oriented and readily legible by an operator in this operative arrangement.

When the keypad 40 is in the position of Figures 1 and 6a, the mark 55 carried by the diaphragm 54 faces and is detectable by the sensor 53.

If, on the other hand, the keypad 40 is oriented as in Figure 6c, the mark 55 faces and is detectable by the sensor 52.

The signals supplied by the sensors 52 and 53 thus enable the circuits 35 of the device to determine whether the keypad is oriented one way or the other.

Should the keypad 40 be positioned between the two positions defined above (e.g. the position of Figure 6b) this is readily detected by the circuits 35 since, in this case, the mark 55 is not detected by either of the sensors 52 and 53.

A strong permanent magnet, indicated 58 in Figure 2, is fixed to the face of the cube-shaped housing 2 which is on the opposite side to the keypad 40. The magnet enables the control device to be fixed firmly to a stationary support structure of ferromagnetic material in the operative arrangement of use shown in Figure 6a or in the operative arrangement shown in Figure 6c.

Naturally, other solutions instead of a permanent magnet may be adopted in order to fix the control device firmly in the required operative arrangement of use at the time in question.

The keypad 40 with the keys 48 to 50 can enable the circuits carried by the boards 34 and 35 to output signals which can bring about movements along one or more of the corresponding axes of the machine. In other words, if only the X axis of the joystick control device is enabled by means of the key 48 in use, the device outputs signals for bringing about movements of a member or members of a machine tool only along the axis of the machine which corresponds to the X axis of the remote control device 1, regardless of any movements of the joystick of the device along one or both of the other axes Y and Z. Naturally, the operation of all three push-buttons 48 to 50 enables the control device 1 to generate signals which can bring about movements of one or more members of the machine along all three of the axes of the machine which correspond to the axes X, Y and Z of the control device 1.

Conveniently, although not necessarily, a rotary knob 60 is mounted on a side face of the cube-shaped housing 2 for operating a regulating potentiometer 61 (Figures 2 and 4) connected to the circuit board 35. This potentiometer can vary the ratio between the magnitudes of the movements of the joystick of the control device 1 and the magnitudes or speeds of the corresponding movements to be brought about in the machine with which the control device is associated.

The knob 60 is partially covered by a protective half-shell 62 fixed to the cube-shaped housing 2.

A safety or emergency switch 63 (Figures 2 and 4), operable externally by means of a mushroom-shaped push-button 64 which extends from the housing, is also conveniently (but not necessarily) mounted in the housing 2. A buffer element, indicated 65 in Figures 1 and 2, extends around a major part of the periphery of this push-button.

The switch 63 is intended to be operated by means of the push-button 64 in emergency situations in order to stop the machine with which the remote control device 1 is associated.

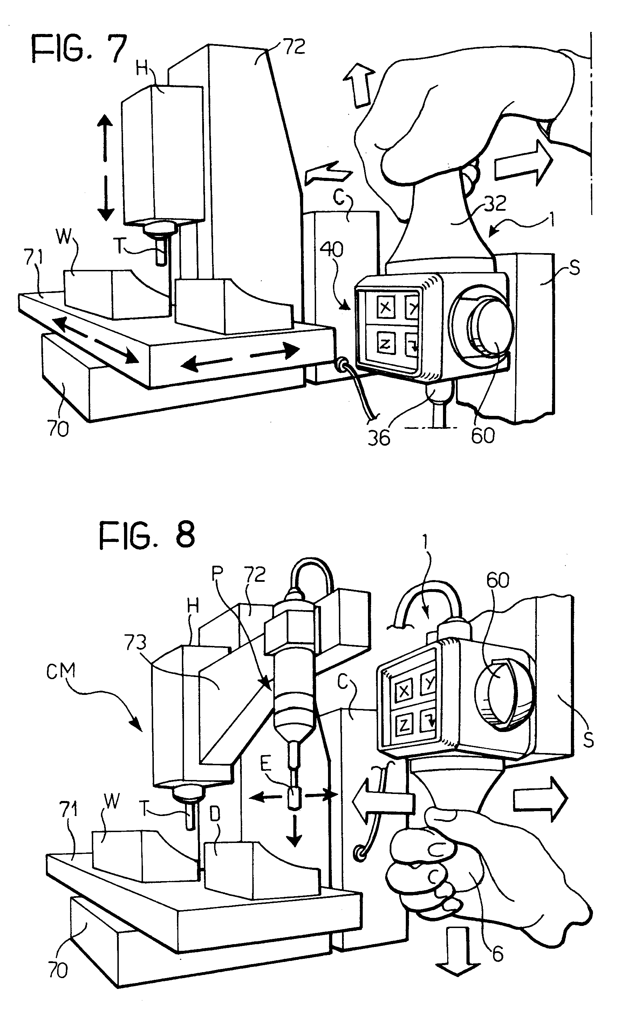

Figure 7 shows a first possible use of the remote control device described above in connection with a machine tool M with three axes. In the example of use shown in Figure 7, the machine M comprises a base 70 on which a platform 71, movable along two perpendicular axes, is mounted. On the platform, there is a piece W which is to be worked by a tool T carried by a tool-holder head H movable in a guided manner along a vertical upright 72 of the machine.

The machine M has three perpendicular axes and is controlled by an electronic control system C which is connected to the remote-control device 1. The remote-control device is fixed to a stationary structure S with the joystick 6-32 pointing upwards and in a manner such that its three reference axes X, Y and Z are parallel to and have the same orientations as those of the machine M.

By operating the joystick of the control device 1, an operator can easily control movements on the axes of the machine as required, for example, during the preparation stage of the work, to permit the loading and positioning of the workpiece W, the positioning of the tool T, etc.

The machine with which the remote-control device 1 is associated may, for example, be a profile-copying machine such as that indicated CM in Figure 8. In the embodiment shown by way of example, this machine comprises a base 70 and a platform 71 which is movable along two axes and is intended to support a workpiece W and a pattern D, the shape of which corresponds to the shape to be imparted to the piece W. A tool, indicated T, carried by a tool-holder head H, is movable vertically relative to an upright 72.

A profile-copying device, generally indicated P, is carried by a cross-member 73 which extends from the tool-holder head H. A feeler pin E extending from the bottom of the profile-copier P can perform limited deflections along three perpendicular axes indicated by the arrows drawn in Figure 8.

A remote-control device 1 of the type described above is connected to the electronic control system C of the profile-copying machine CM.

The control device can be used in the first operative arrangement (with the joystick oriented upwardly) in order to move the axes of the machine exactly as described above with reference to Figure 7.

The remote control device 1 may also advantageously be used in connection with the profile-copying machine CM in the second operative arrangement, that is, with the joystick oriented downwardly, as shown in Figure 8, to control the working of the piece W by the tool T. In the operative arrangement of Figure 8, the joystick 6 of the remote control device is oriented in the same way as the feeler pin E of the profile-copier P. The joystick in fact constitutes a kind of virtual feeler pin by means of which the operator can control the working, as occurs in a profile-copying machine which can carry out the technique known as "pencil mode" copying. This copying technique is used when the maximum material-removing capability of the tool of a profile-copying machine is to be utilized.

During automatic profile-copying, in which the movements of the tool relative to the workpiece are controlled automatically in dependence on the signals coming from the electronic feeler pin which scans the pattern, the volume of material removed per unit of time is generally much less than the maximum possible in order to prevent the vibrations induced in the machine as a result of the interaction between the tool and the piece from reaching a level such as to interfere with the scanning of the pattern by the feeler pin. The vibrations could in fact cause the feeler pin to "jump" and trigger positive feedback, with potentially disastrous results.

In profile-copying machines which are arranged to permit copying by the "pencil mode" technique, it is possible to manoeuvre the feeler pin manually by deflecting it in the direction desired at the time in question. The control system of the machine correspondingly operates the tool at a speed proportional to the amplitude of the deflection imparted to the feeler pin manually. By manoeuvring the feeler pin manually, the operator can thus cause the tool to act on the workpiece so as to remove material, if necessary, at the limit of its capability.

This working mode is particularly effective for carrying out initial cutting or roughing quickly. In any case, in the "pencil" operating mode, when the tip of the feeler pin is brought up against the surface of the pattern to be copied, the feeler pin stops and no further deflection towards the pattern is possible.

The "pencil mode" working technique improves the efficiency of the profile-copying machine in use but nevertheless has various disadvantages. The operator who has to manoeuvre the feeler pin often finds himself in the path of the axes of the machine or, in any case, near the zone in which the tool acts on the piece being processed. In the case of large pieces and patterns, the operator is forced to perform inconvenient movements and sometimes to lean over or even lie down on the pattern, for example, when the feeler pin has to be taken into deep and hidden recesses.

With the remote control device described above, associated with a profile-copying machine in the manner shown in Figure 8, processing can be carried out by the "pencil mode" technique by acting on the joystick of the remote control device instead of manoeuvring the feeler pin manually. For this purpose, as shown in Figure 8, the remote control device is fixed to a stationary structure in a manner such that the joystick faces downwards and the axes of the control device are parallel to the axes of the feeler pin.

For easy and intuitive use of the control device 1 in order to simulate manual manoeuvring of the feeler pin, it is also convenient if the axes of the joystick and of the feeler pin have the same orientations.

In this connection, it should be noted, however, that if the remote-control device 1 is first used for moving the axes of the machine with the joystick pointing upwards and is then used in connection with the same profile-copying machine for copying in "pencil mode" with the joystick pointing downwards, the inversion of the device in fact involves a change in the signs or orientations of two of its axes (X and Z). Moreover, it should be noted that the conventional directions of movement on the axes of the machine do not generally correspond to the directions or signs attributed to the deflection axes of the feeler pin.

In view of these circumstances, in changing from the use of the control device with the joystick pointing upwards to a condition of use in which the joystick faces downwards, the circuits of the control device must be able to modify the signs or directions attributed to the movements of the joystick along its three axes.

With the joystick device described above, this is conveniently achieved as a result of the rotation of the keypad 40 which should therefore be done each time a change is made from the operative arrangement of use of Figure 7 to the operative arrangement of Figure 8. As already explained above, in one way, the rotation of the keypad 40 enables the keypad to be disposed in a manner such that the symbols X, Y and Z are always correctly oriented and therefore readily legible by the operator. The rotation of the keypad is detected by the internal circuits of the control device on the basis of the data coming from the sensors 52 and 53. The circuits can thus conveniently be arranged to put into effect, in the two different positions adopted by the keypad 40, two different predetermined sign conventions for the movements of the joystick in relation to the axes of the machine and in relation to the feeler pin, respectively.

The control system C of a profile-copying machine of the type described above with reference to Figure 8 may conveniently be arranged, by means of a position control loop, in a manner such that, during "pencil mode" processing controlled by means of the joystick of the control device 1, movements of the feeler pin E and of the tool T are brought about at speeds and in directions corresponding to the magnitudes of the deflections of the joystick until the feeler pin comes up against the surface of the pattern and undergoes a deflection of a predetermined magnitude. In this situation, although the joystick continues to be deflected in the direction in question, the advance of the tool is stopped so that the feeler pin E acts in a certain sense as a "travel limit switch" to keep the removal of material from the piece W within safety limits.

The use of the joystick control device according to the invention for processing in "pencil mode" has obvious advantages in terms of safety and in terms of practicality : the operator remains a certain distance from the machine and can control the roughing of the piece by moving the joystick in the same way in which, in conventional machines, he had to move the stilus of the feeler pin.

The fact that the device can be oriented with the joystick pointing downwards enables control to be exercised in "pencil" mode wholly intuitively and naturally just as if one were acting directly on the stilus of the feeler pin.

Naturally, the principle of the invention remaining the same, the forms of embodiment and details of construction may be varied widely with respect to those described and illustrated purely by way of non-limiting example, without thereby departing from the scope of the present invention.

In particular, a simplified version of the remote-control device described above, which is intended to operate exclusively in the operative arrangement with the joystick pointing downwards to enable "pencil mode" processing to be carried out by the operation of the joystick, also falls within this scope. In this simplified version, of course, it is not necessary for the device to have a rotatable keypad or position sensors associated with the keypad.

## Claims

1. A device for the remote control of the movement of one or more members of a machine (M, CM), particularly a machine tool, along at least three independent axes, characterized in that it comprises, in combination
a support housing (2);
a joystick control device (5-22) which is movable in the housing (2) and can perform movements along at least three reference axes, and which has an operating member (5, 6) extending from the housing (2) and movable manually along the reference axes;
electrical detector means (25, 26; 28-31) for providing electrical signals indicative of the magnitudes and signs of the movements along the reference axes (X, Y, Z) imparted to the operating member (5, 6) of the joystick device (5-22) in use;
processing circuit means (34, 35) connected to the detector means (25, 26; 28-31) for generating electrical signals usable for bringing about movements of a member or members of the machine (M ; CM) along three independent axes of the machine, the movements corresponding to the movements of the operating member (5, 6) of the joystick device (5-22) relative to the reference axes (X, Y, Z);
stabilizing means (58) for enabling the housing (2) to be fixed to a support structure (S) in at least first and second operative arrangements, in which the operating member (5, 6) of the joystick device (5-22) extends upwardly and downwardly from the housing (2), respectively;
hand-operable selection means (40) which can adopt first and second conditions when the joystick control device (5-22) is used in the first and second operative arrangements, respectively; the selection means (40) being able, in each of the conditions, to provide the circuit means (34, 35) with electrical signals for establishing a predetermined sign relationship between one or more of the reference axes (X, Y, Z) associated with the joystick device (5, 22) and the corresponding axes of the machine (M ; CM).

2. A device according to Claim 1, characterized in that it also comprises an enabling device (40) connected to the circuit means (34, 35) and including manually-operable control means (48-51) for providing the circuit means (34, 35) with signals to enable them selectively to emit signals to bring about movement along one or more axes of the machine (M, CM).

3. A device according to Claim 2, characterized in that the enabling device comprises a keypad (40) which is mounted rotatably on a side surface or face of the housing (2) and can adopt at least two operative positions which are spaced angularly by 180^{o} and are associated with the different operative arrangements of the housing (2), respectively, in a manner such that the keypad (40) can be oriented in the same manner in both operative arrangements of the housing (2) and of the associated joystick device (5-22).

4. A device according to Claim 3, characterized in that it also comprises electrical sensor means (52-55) for detecting the position of the keypad (40) in order to provide the circuit means (34, 35) with the enabling signals in accordance with the operative arrangement of the keypad (40).

5. A device according to any one of the preceding claims, characterized in that the electrical detector means comprise at least three detector devices (25, 26; 28-31), each of which comprises an emitter, in particular, a photodiode, which can send radiation towards a corresponding portion (5b ; 9b) of the joystick device (5 -22), and an associated detector, in particular, a phototransistor disposed adjacent the emitter for receiving the radiation reflected or scattered back by the portion (5b ; 9b) of the joystick device (5-22).

6. A device according to Claim 5, characterized in that each detector device comprises first (25; 28; 29) and second (26; 30; 31) emitter/detector pairs which are associated with a respective movable member (5b ; 9b) of the joystick device (5-22) in a manner such that a movement of the member (5b ;9b) along a reference axis increases the radiation reflected or scattered back towards the detector of one pair and decreases the radiation reflected or scattered back towards the detector of the other pair.

7. A device according to Claim 5 or Claim 6, characterized in that the joystick device (5-22) comprises a hollow body (7) which is suspended in the housing (2, 12) by means of a flexible membrane (11), and a rod (5) which is suspended resiliently in a tubular portion (8, 9a) of the hollow body (7) oriented substantially transverse the plane in which the membrane (11) normally lies and can move along the axis of the tubular portion (8, 9a) of the hollow body (7) in opposite directions ; the axis constituting one (Z) of the three reference axes ; the hollow body (7) carrying at least one first detector device (25, 26) for providing signals indicative of the magnitude and of the sign of the movement of the rod (5) relative to the tubular portion (8, 9a) of the hollow body (7); and the housing (2, 12) carrying at least one second and one third detector device (28-31) for providing electrical signals indicative of the magnitudes and of the signs of the movements of the hollow body (7) relative to the housing ( 2, 12) along the other two reference axes (X, Y).

8. A device according to Claim 4, characterized in that the sensor means comprise two further detector devices (52, 53) associated with the keypad (40) in diametrally opposed positions with respect to the axis of rotation (40) thereof, and an optically detectable mark (55) disposed in a fixed position in the housing (2) such that it is detectable by one of the detector devices (52, 53) associated with the keypad and by the other when the keypad (40) adopts the first and second operative arrangements relative to the housing (2), respectively.

9. A device according to Claim 6, characterized in that each detector device (52, 53) associated with the keypad (40) comprises a radiation emitter/detector pair.

10. A device according to any one of the preceding claims, characterized in that the stabilizing means comprise a permanent magnet (58) carried by the housing (2) on one of its side surfaces or faces.

11. A device according to Claims 3 and 10, characterized in that the stabilizing means (58) are on a side surface or face of the housing (2) opposite the surface or face on which the keypad (40) is disposed.

12. A device according to any one of the preceding claims, characterized in that the housing (2) is substantially in the form of a cube and the joystick control device (5, 22) extends through a first face thereof.

13. A device according to Claim 12, characterized in that the housing (2) also carries, on one of its side faces, a manually-operable control member (60) for controlling an adjustment potentiometer which is connected to the circuit means (34, 35) and can modify the ratios between the magnitudes of the movements of the operating member (6, 5) of the joystick device (5-22) and the corresponding movements to be brought about in the associated machine (M; CM).

14. A device according to Claim 13, characterized in that the housing also carries, on another of its side faces, the operating member (64) of an emergency switch which is connected to the circuit means and, when activated, can cause the de-activation of the machine to which the device is connected.

15. The use of a remote-control device (1) according to one or more of the preceding claims in the first operative arrangement for controlling the movement of the axes of a machine tool (M; CM) or for scanning and digitizing the surface of a pattern (D).

16. The use of a remote control device (1) according to one or more of the preceding claims in connection with a profile-copying machine tool (CM) including a tool (T) which is movable relative to a workpiece (W) and a feeler pin (E) which is movable relative to a pattern (D) to be scanned ; the remote control device (1) being used in the first operative arrangement for controlling the movement of the axes of the machine (CM), and in the second operative arrangement for controlling the movements of the feeler pin (E) relative to the pattern (D) and of the tool (T) relative to the piece (W), respectively, at speeds depending on the magnitudes of the movements imparted manually to the joystick device (5-22).

17. A profile-copying machine tool (CM) with at least three axes, characterized in that it comprises
support means (70, 71) for supporting a piece (W) to be worked and a pattern (D), the shape of which is to be imparted to the piece (W),
tooling means (H, T) comprising a movable tool (T) for removing material from the workpiece (W),
a profile-copier (C) comprising a movable feeler pin (E) for scanning the surface of the pattern (D) from above,
a remote-control device (1) according to one or more of Claims 1 to 14, and
control means (C) connected to the remote-control device (1) for bringing about movements of the feeler pin (E) relative to the pattern (D) and of the tool (T) relative to the workpiece (W), along at least three axes;
the control means (C) being arranged to bring about:
- in a first operating mode, movements on the axes of the machine (CM) in dependence on the movements imparted manually to the joystick control device (5-22) of the remote control device (1), used in the first operative arrangement; and
- in a second operating mode, movements of the feeler pin (E) relative to the pattern (D) and corresponding movements of the tool (T) relative to the workpiece (W), at variable speeds, in dependence on the magnitudes of the movements imparted manually to the joystick device (5-22) of the remote-control device (1), used in the second operative arrangement.

18. A profile-copying machine tool (CM) with at least three axes, characterized in that it comprises
support means (70, 71) for supporting a piece (W) to be worked and a pattern (D), the shape of which is to be imparted to the piece (W);
tooling means (H, T) comprising a movable tool (T) for removing material from the workpiece (W);
a profile-copier device (C) comprising a movable feeler pin (E) for scanning the surface of the pattern (D) from above,
a remote control device (1) comprising
a support housing (2);
a joystick control device (5-22) which is movable in the housing (2) and can perform limited movements along three axes (X, Y, Z), and which comprises a manually manoeuvrable member (5, 6) which extends from the housing (2);
the housing (2) being intended for use in a fixed operative arrangement in which the member (5, 6) of the joystick device (5-22) extends downwards; and
detector means (25, 26, 28-31) disposed in the housing (2) for providing electrical output signals indicative of the magnitudes and of the signs of the movements of the member (5, 6) of the joystick device (5-22) along the axes (X, Y, Z); and
control means (C) connected to the remote control device (1) for bringing about relative movements of the feeler pin (E) relative to the pattern (D) and of the tool (T) relative to the workpiece (W), along at least three axes;
the control means (C) being arranged, in one operating mode, to bring about movements of the feeler pin (E) relative to the pattern (D) and corresponding movements of the tool (T) relative to the piece (W), at variable speeds, in dependence on the movements imparted manually to the operating member of the joystick device (5-22) of the remote-control device (1).
